# FASCICULE DE BREVET EUROPEEN

(11) **EP 2 030 495 B1**
(45) Date de publication et mention de la délivrance du brevet: **22.06.2011**
(21) Numéro de dépôt: 08162929.7
(22) Date de dépôt: 26.08.2008
(51) Int. Cl.: A01B 73/00, A01C 7/04

(54) **Châssis télescopique amélioré et appareil agricole avec un tel châssis**
Verbesserter teleskopischer Rahmen und landwirtschaftliches Gerät mit einem solchen Rahmen
Improved telescopic frame and agricultural apparatus with such a frame

(30) Priorité: 30.08.2007 FR 0757267
(43) Date de publication de la demande: 04.03.2009
(73) Titulaire: KUHN S.A., 67700 Saverne (FR)
(72) Inventeur: Maricelli, Gianfranco, 33075, Morsano Al Tagl. TO (PN) (IT); Audigie, Jean-Charles, 67330, Bouxwiller (FR)

(56) Documents cités:
- EP-A- 0 431 988
- EP-A- 1 514 465
- FR-A- 2 862 181
- US-A- 3 841 413

## Description

La présente invention se rapporte au domaine technique général du machinisme agricole. Elle se rapporte plus particulièrement à un châssis télescopique de largeur variable pour un appareil agricole comportant une poutre centrale et de part et d'autre au moins une extension coulissante, ledit châssis télescopique portant des outils de travail répartis suivant un écartement défini et réglable, ledit châssis télescopique présentant en outre un encombrement réduit lorsque l'écartement entre lesdits outils de travail est minimum, la poutre centrale, quant à elle, présentant une longueur sensiblement voisine à celle dudit châssis télescopique dans sa position d'encombrement réduit. L'invention trouve son application dans le domaine du semoir, du distributeur de précision. De façon générale, l'invention concerne une machine agricole qui est destinée à travailler sur des lignes ou rangées parallèles qui sont espacées d'un certain écartement.

Un tel châssis télescopique est connu de l'homme du métier par l'intermédiaire du document FR 2 862 181. Ce châssis télescopique porte six outils de travail. Il comporte une poutre centrale et de part et d'autre, deux extensions coulissantes. Une première extension coulisse dans la poutre centrale et une deuxième extension coulisse dans la première extension. La poutre centrale porte deux outils de travail alors que chaque extension porte un seul outil de travail. Il est connu que selon la culture à implanter l'écartement entre les outils de travail varie. Le châssis télescopique peut ainsi passer d'un encombrement réduit à un encombrement plus important, et inversement. Le châssis télescopique présente un encombrement réduit lorsque l'écartement entre lesdits outils de travail est minimum. Depuis cette position, les premières et deuxièmes extensions coulissent vers l'extérieur jusqu'à arriver à l'écartement souhaité entre les outils de travail. La poutre centrale présente une longueur sensiblement voisine à celle du châssis télescopique avec l'encombrement réduit.

Lors de l'utilisation de ce châssis télescopique pour l'implantation de maïs, l'écartement entre deux outils de travail voisin est d'environ 75 cm. Le châssis télescopique est ouvert et les premières et les deuxièmes extensions sont déployées. Dans cette position ouverte, la longueur de guidage des extensions est réduite car la longueur des premières et des deuxièmes extensions est relativement courte. La longueur de guidage correspond à la longueur restante dans la poutre centrale ou dans la première extension lorsque le châssis s'ouvre. Avec une longueur de guidage courte, le risque de déformation et de rupture du châssis télescopique augmente et par conséquent l'ouverture et la fermeture du châssis sont pénibles. Ces inconvénients s'accentuent au fur et à mesure que le châssis télescopique s'ouvre. Comme la longueur de guidage est réduite, la stabilité des outils de travail est également diminuée.

La présente invention a pour but de proposer un châssis télescopique permettant de remédier aux inconvénients de l'état de la technique et notamment en proposant un châssis télescopique compact dont la rigidité est améliorée.

A cet effet, une importante caractéristique de l'invention consiste en ce que la longueur de chaque extension est sensiblement égale à la longueur de ladite poutre centrale. La rigidité du châssis télescopique est donc améliorée quel que soit l'écartement réglé entre les outils de travail. Grâce à la grande longueur des extensions coulissantes, la longueur de guidage est importante et le risque de déformation du châssis télescopique est moindre.

Selon une autre caractéristique de l'invention, les extensions restent emboitées l'une dans l'autre quelle que soit leur position dans la poutre centrale.

Selon une caractéristique supplémentaire très avantageuse de l'invention, chaque extension coulissante présente une section différente. Ainsi, on obtient un châssis télescopique parfaitement empilable et qui est compact.

D'autres caractéristiques de l'invention, à considérer séparément ou dans toutes leurs combinaisons possibles, apparaîtront dans la description suivante d'un exemple de réalisation non limitatif de l'invention représenté sur les dessins annexés sur lesquels :
- la **figure 1** représente une vue de dessus d'un châssis télescopique conforme à l'invention,
- la **figure 2** représente une vue de dessus du châssis télescopique avec un écartement minimum entre les outils de travail,
- la **figure 3** représente une vue de dessus du châssis télescopique avec un écartement maximum entre les outils de travail,
- la **figure 4** est une représentation selon une coupe horizontale du châssis télescopique avec un écartement minimum,
- la **figure 5** est une représentation selon une coupe horizontale du châssis télescopique avec un écartement maximum.

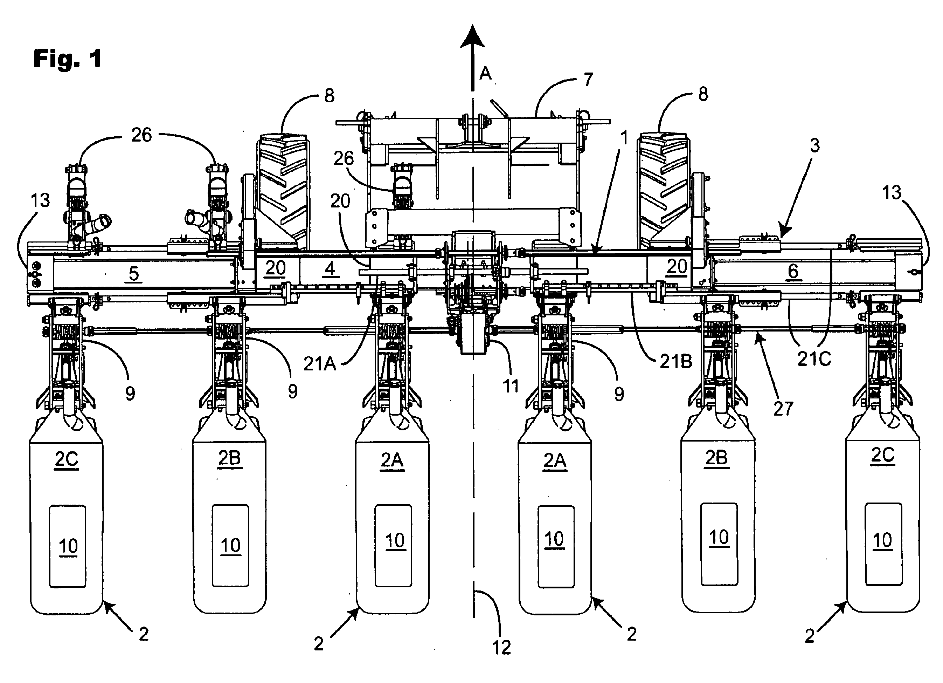

Le châssis télescopique (1) de largeur variable représenté sur la figure 1 porte des outils de travail (2). Ce châssis télescopique (1) pour un appareil agricole (3) tel qu'un semoir monograines comporte une poutre centrale (4) et de part et d'autre au moins une extension coulissante (5, 6). La poutre centrale (4) est avantageusement creuse. Ce châssis télescopique (1) passe d'un encombrement minimum à un encombrement maximum et inversement par coulissement des extensions (5, 6) dans la poutre centrale (4). Pour réduire l'encombrement du châssis (1), les extensions coulissantes (5, 6) sont rétractées dans la poutre centrale (4) de manière télescopique alors que pour augmenter l'encombrement les extensions coulissantes (5, 6) sont déployées dans la poutre centrale (4). Le châssis télescopique (1) est creux et de préférence présente une section polygonale, section qui empêche une rotation entre l'extension coulissante (5, 6) et la poutre centrale (4). La forme de la section est de façon connue carrée, rectangulaire ou en H.

Le châssis télescopique (1) supporte des outils de travail (2) répartis suivant un écartement défini et réglable. La conception du châssis (1) de l'invention permet de modifier rapidement l'écartement entre les outils de travail (2), il s'agit d'un châssis indexable. La plage de réglage de l'écartement s'étend de 43 à 80 cm. Dans l'exemple de réalisation de la figure 1, l'appareil agricole (3) est un semoir de précision ou semoir monograines. Un tel semoir peut implanter différents types de graines dans le sol et l'écartement entre les lignes de semis est adapté en fonction de l'espèce de graine semée. D'une manière connue, il est courant de régler un écartement de 45 ou 50 cm pour semer de la betterave tandis que l'écartement privilégié pour le semis de maïs est de 75 ou 80 cm. Dans le cas d'un tel semoir les outils de travail (2) sont des éléments semeurs.

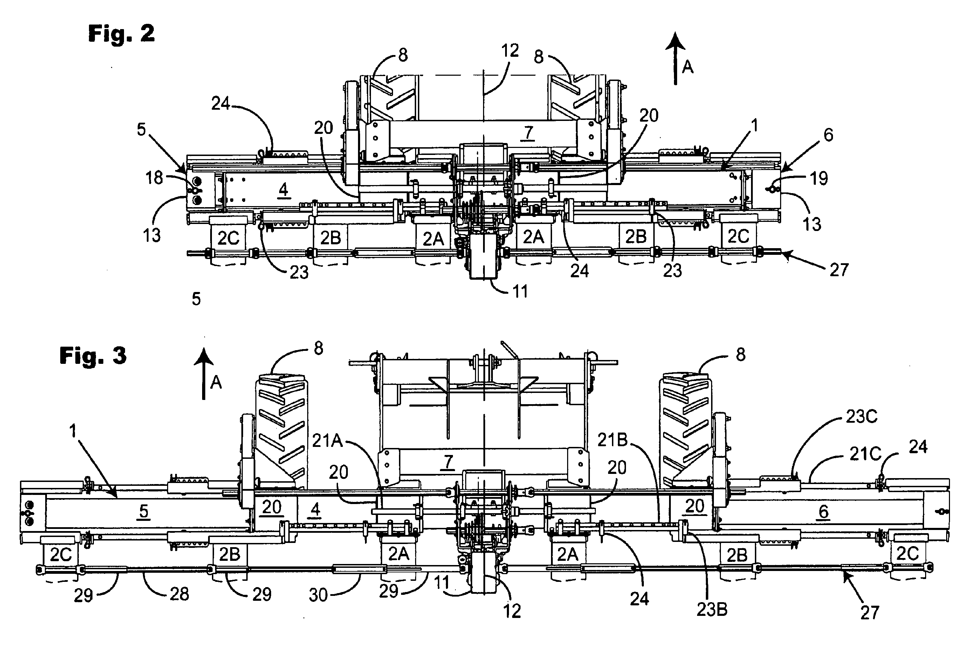

La figure 2 représente le châssis télescopique (1) avec un encombrement réduit correspondant à un écartement entre les outils de travail (2) de 45 cm. La poutre centrale (4) présente une longueur sensiblement voisine à la largeur du châssis télescopique (1) dans la configuration encombrement réduit. De préférence, la longueur de la poutre centrale (4) est inférieure à la largeur du châssis télescopique (1). La figure 3 représente, pour sa part, le châssis télescopique (1) avec un encombrement maximum correspondant à un écartement de 80 cm. Les extensions coulissantes (5, 6) sont déployées, le châssis télescopique (1) est ouvert au maximum. Ce châssis télescopique (1) permet à l'utilisateur de s'adapter facilement à l'espèce de graine à semer (betterave, maïs, ...) en permettant un réglage de l'écartement minimum entre les outils de travail (2). La largeur du châssis télescopique (1) est donc variable. Pour faciliter la modification de l'écartement entre les outils de travail (2), le châssis télescopique (1) est commandé depuis la cabine du tracteur par exemple de manière hydraulique, pneumatique ou électrique.

Le châssis télescopique (1) est déplacé, au travail et au transport, par un tracteur (non représenté) suivant une direction et un sens d'avance indiqué par la flèche (A). La poutre centrale (4) présente un cadre d'attelage (7) permettant sa liaison au tracteur. Dans l'exemple de réalisation des figures, l'appareil agricole (3) est un semoir comportant six outils de travail (2) répartis avantageusement à intervalles réguliers sur le châssis télescopique (1). Il assure un semis individualisé des graines selon six rangées bien déterminées. Le châssis télescopique (1) est disposé sensiblement horizontalement et sensiblement perpendiculairement à la direction d'avance (A). Le châssis télescopique (1) supporte également des roues (8) destinées à s'appuyer sur le sol et des mécanismes d'entraînement de la distribution. Le châssis télescopique (1) est symétrique par rapport à un plan vertical médian (12) sensiblement parallèle à la direction d'avance (A). Il comporte une première extension (5) qui est destinée à coulisser dans la partie gauche de la poutre centrale (4) par rapport à la direction d'avance (A). Il comporte également une deuxième extension (6) qui est destinée à coulisser dans la partie droite de la poutre centrale (4) par rapport à la direction d'avance (A).

Les outils de travail (2) sont montés sur le châssis (1), de manière connue, au moyen d'un parallélogramme déformable (9) respectif. De ce fait, l'outil de travail (2) est libre en hauteur et peut suivre fidèlement les dénivellations du sol en restant parallèle au sol. Dans le cas du semoir monograines, chaque élément semeur possède une trémie (10) constituant une réserve de graines, une distribution et un dispositif de mise en terre. La distribution permet d'extraire une à une, les graines de la trémie (10) et de les distribuer à intervalle constant sur la ligne de semis. Le dispositif de mise en terre crée un sillon à une profondeur déterminée pour y placer la graine et la recouvrir de terre. Chaque élément semeur comporte encore une roue de jauge pour le contrôle de la profondeur de semis et un dispositif de plombage permettant le rappui des graines dans le sillon. L'élément semeur peut être équipé d'un dispositif chasse débris à l'avant.

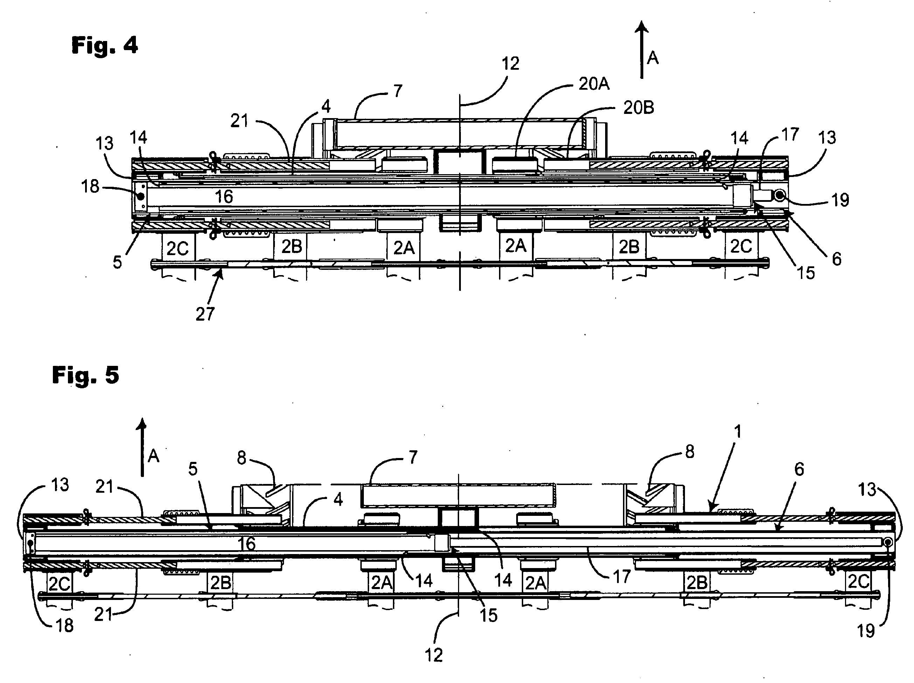

Selon une caractéristique importante de la présente invention, la longueur de chaque extension coulissante (5, 6) est sensiblement égale à la longueur de ladite poutre centrale (4). Grâce à cette longueur importante des extensions coulissantes (5, 6), la rigidité du châssis télescopique (1) est améliorée. La longueur de la poutre centrale (4) est sensiblement inférieure à celle du châssis télescopique dans sa position d'encombrement réduit. La figure 4 représente le châssis télescopique (1) selon une coupe horizontale avec un encombrement réduit correspondant à un écartement de 45 cm. Chaque extension coulissante (5, 6) présente une extrémité extérieure (13) et une extrémité intérieure (14). La longueur d'une extension coulissante (5, 6) correspond donc à la distance séparant l'extrémité extérieure (13) de l'extrémité intérieure (14). On remarque que l'extrémité extérieure (13) s'étend au-delà de la poutre centrale (4) alors que l'extrémité intérieure (14) s'étend à l'intérieur de la poutre centrale (4). L'extrémité extérieure (13) d'une extension coulissante (5, 6) respective s'étend d'un côté du plan vertical médian (12) alors que l'extrémité intérieure (14) s'étend de l'autre côté du plan vertical médian (12) du châssis télescopique (1). D'une manière avantageuse, l'extrémité extérieure (13) et l'extrémité intérieure (14) d'une extension coulissante (5, 6) correspondante s'étendent toujours d'un côté différent du plan vertical médian (12).

La figure 5 représente le châssis télescopique (1) selon une coupe horizontale avec un encombrement maximum correspondant à un écartement de 80 cm. Chaque extension (5, 6) présente une longueur de guidage, correspondant à la longueur demeurant dans la poutre centrale (4), sensiblement égale à au moins une demi-longueur de cette poutre centrale (4). La longueur de guidage est importante. La rigidité du châssis télescopique (1) est donc bien améliorée, même lorsque celui-ci est ouvert au maximum. Selon un avantage supplémentaire, la première extension coulissante (5) et la deuxième extension coulissante (6) restent emboîtées l'une dans l'autre à l'intérieur de la poutre centrale (4) quel que soit l'écartement réglé. La rigidité est aussi augmentée grâce aux extrémités intérieures (14) des extensions coulissantes (5, 6) qui restent emboitées l'une dans l'autre. Les déformations du châssis télescopique (1) sont ainsi réduites.

Les extensions coulissantes (5, 6) sont amenées d'une part à coulisser dans la poutre centrale (4) et d'autre part l'une dans l'autre. Elles sont donc creuses. Les extensions coulissantes (5, 6) présentent des sections de forme correspondante, mais de dimension différente permettant un empilement télescopique. Chaque extrémité de la poutre centrale (4) comporte des patins (22) permettant d'assurer le guidage de l'extension coulissante (5, 6) correspondante. Ces patins (22) favorisent le coulissement des extensions coulissantes (5, 6) dans la poutre centrale (4). Dans l'exemple de réalisation représenté, la section transversale de la poutre centrale (4) et des extensions coulissantes (5, 6) est carrée. Pour réaliser un encombrement réduit du châssis (1), la dimension des sections carrées des deux extensions (5, 6) est différente. D'après les figures 4 et 5, la dimension de la section transversale de la première extension (5) est supérieure à la section transversale de la deuxième extension (6). La deuxième extension (6) coulisse dans la première extension (5). Les extensions (5, 6) coulissent dans la poutre centrale (4), ainsi la section carrée de la poutre centrale (4) est plus grande que celle des extensions (5, 6). La section intérieure de la poutre centrale (4) est sensiblement égale à la section extérieure de la première extension (5). La section intérieure de la première extension (5) est sensiblement égale à la section extérieure de la deuxième extension (6). Un jeu minimal est nécessaire pour le bon coulissement des extensions (5, 6). Grâce à la différence de section, on obtient un empilement optimal des extensions coulissantes (5, 6) dans la poutre centrale (4) et un encombrement minimum du châssis télescopique (1).

A la lumière de la figure 1, le châssis télescopique (1) porte quatre outils de travail (2) qui sont mobiles sur la poutre centrale (4). Chaque extension coulissante (5, 6) porte un outil de travail (2). On distingue donc deux outils de travail centraux (2A), deux outils de travail intermédiaires (2B) et deux outils de travail extérieurs (2C). Dans la suite de la description et pour une meilleure compréhension, le qualificatif (A, B ou C) est ajouté derrière le repère du terme désigné comme étant central, intermédiaire ou extérieur. Un outil extérieur (2C) est lié à une extension coulissante (5, 6) respective et les outils intermédiaires et centraux (2B, 2A) sont liés à la poutre centrale (4) via un fourreau respectif (20). Chaque fourreau (20) coulisse sur la poutre centrale (4) en fonction de l'écartement réglé. Les outils de travail (2) sont reliés les uns aux autres via des tirants (21). Ces tirants (21) sont des tiges longitudinales dont la section permet une sollicitation à la traction. Chaque tirant (21) est muni de trous permettant le réglage de l'écartement entre les outils de travail (2). L'écartement souhaité entre les éléments de travail (2) est obtenu grâce à une butée d'ouverture (23) et/ou une butée de fermeture (24).

Selon une autre caractéristique de l'invention, les extensions (5, 6) coulissent dans la poutre centrale (4) par l'intermédiaire d'un unique vérin (15). Le vérin (15) comporte un corps (16) et une tige (17). Le vérin (15) est, de préférence, intégré dans le châssis télescopique (1) creux. Avantageusement, le corps (16) est lié à la première extension coulissante (5) qui présente une section plus grande et la tige (17) est liée à la deuxième extension coulissante (6) de section plus petite. Le corps (16) est lié à la première extension (5) au moyen d'une première articulation (18) d'axe sensiblement vertical et la tige (17) est liée à la deuxième extension (6) au moyen d'une deuxième articulation (19). Les articulations (18, 19) sont dans le voisinage des extrémités extérieures (13) des extensions (5, 6). Ainsi, le vérin (15) s'ouvre ou se ferme jusqu'à ce que chaque tirant (21) arrive contre la butée d'ouverture (23) ou contre la butée de fermeture (24). Selon l'écartement souhaité la position des butées d'ouverture ou de fermeture (23, 24) est modifiée. Dans l'exemple de réalisation représenté, les possibilités de réglage de l'écartement entre deux rangs voisins sont importantes. L'écartement peut varier entre 45 et 80 cm avec une valeur minimum de 43 cm.

Pour passer d'un écartement réduit (figure 2) à un écartement intermédiaire ou jusqu'à l'écartement maximum (figure 3), le châssis télescopique (1) est déployé au moyen du vérin (15). Ce dernier s'ouvre et entraîne au fur et à mesure les outils extérieurs (2C), les outils intermédiaires (2B) et les outils centraux (2A). Pour cela, le châssis télescopique (1) est de préférence dégagé du sol au moyen de l'attelage trois points du tracteur. Les extensions coulissantes (5, 6) liées au vérin (15) coulissent hors de la poutre centrale (4) jusqu'à ce que les tirants extérieurs (21C) s'appuient contre les butées d'ouverture (23C). Le tirant (21C) est lié à l'extension coulissante (5, 6) correspondante. Grâce à la butée d'ouverture (23C), on obtient l'écartement souhaité entre l'outil extérieur (2C) et l'outil intermédiaire (2B). Lorsque les tirants extérieurs (21C) arrivent en butée, ce sont les outils intermédiaires (2B) avec leur fourreau respectif (20B) qui coulisse sur la poutre centrale (4) avec l'ouverture du vérin (15). Les outils intermédiaires (2B) s'écartent alors du plan vertical médian (12) jusqu'à ce que les tirants intermédiaires (21B) arrivent contre les butées d'ouverture (23B) correspondantes. Puis, ce sont les deux outils centraux (2A) avec leur fourreau respectif (20A) qui s'écartent du plan vertical médian (12) jusqu'à ce que les tirants centraux (21A) arrivent en butée.

Lors de la fermeture, la tige (17) rentre dans le corps (16) du vérin (15) et l'encombrement en largeur du châssis télescopique (1) est réduit. Dans ce cas, ce sont les butées de fermeture (24) qui sont utiles. Lors du passage à un écartement inférieur, les outils de travail (2) se rapprochent les uns des autres et chacun se rapproche aussi du plan vertical médian (12). Sur les figures, l'écartement entre les différents outils de travail (2) est régulier. Il n'est pas nécessaire que tous les outils de travail (2) soient équidistants les uns des autres. On peut aussi imaginer une répartition irrégulière des outils de travail (2) sur le châssis télescopique (1) en fonction des exigences propres à une culture ou à un terrain. L'ajout d'un élément de travail dans le plan vertical médian (12) est aussi possible.

D'une manière particulièrement avantageuse, le cadre d'attelage (7) est lié uniquement à la poutre centrale (4) au niveau du plan vertical médian (12). Les fourreaux respectifs (20) des outils de travail centraux et intermédiaires (2A, 2B) peuvent alors se rapprocher davantage du plan vertical médian (12) en glissant sous le cadre d'attelage (7). Une telle conception de la liaison cadre/poutre permet la réduction de l'encombrement en largeur du châssis télescopique (1) à 2,50 mètres avec un écartement de 43 cm. Ainsi réglé, le châssis télescopique (1) peut être transporté sur les routes en étant lié à l'attelage trois points du tracteur. Cette liaison permet également d'ajouter un équipement complémentaire du type dispositif de fertilisation pour les outils centraux (2A). L'adaptation d'un tel dispositif de fertilisation sur le châssis télescopique (1) permet de réaliser l'apport d'engrais et le semis de graines en un seul passage. Pour cela, un enfouisseur (26) est monté à l'avant de l'outil de travail (2). L'enfouisseur (26) de l'outil de travail central (2A) glisse avantageusement sous le cadre d'attelage (7) lorsque le châssis télescopique (1) est rétracté. Les enfouisseurs (26) ne sont représentés que sur la partie gauche du semoir compte tenu de la direction d'avance (A). Pour que l'engrais soit placé au voisinage des graines, l'enfouisseur (26) est décalé latéralement par rapport à l'outil de travail (2). Le semoir est alors équipé d'une trémie de stockage de granulés et de dispositifs d'acheminement vers les enfouisseurs.

D'une manière avantageuse, une roue (8) est montée sur chaque fourreau intermédiaire (20B). Les roues (8) se déplacent donc avec l'outil de travail intermédiaire (2B). Elles sont montées décalées latéralement par rapport à l'outil de travail intermédiaire (2B). Ainsi, les graines ne sont pas semées dans les traces laissées par les roues (8). La liaison cadre/poutre permet aux fourreaux intermédiaires (20B) portant les roues (8) de se rapprocher au maximum du plan vertical médian (12).

Pour semer les graines avec un écartement constant, la vitesse de la distribution est adaptée à la vitesse d'avance du semoir. Ainsi, les roues (8) du semoir entraînent une boîte de vitesse (11) qui transmet le mouvement aux éléments semeurs via une barre d'entraînement (27). La boîte de vitesse (11) est disposée sensiblement dans le plan vertical médian (12) du châssis télescopique (1). La position centrale de la boîte de vitesse (11) permet une meilleure répartition de la transmission du couple vers les six éléments semeurs. La conception de la barre d'entraînement (27) est également télescopique et rétractable. Elle doit entraîner les différents outils de travail (2) quel que soit l'écartement réglé entre eux. Cet écartement varie de 43 à 80 cm. La barre d'entraînement (27) est avantageusement parallèle au châssis télescopique (1). Elle est composée d'éléments mâles (28) qui coulissent dans des éléments femelles (29). La section intérieure de l'élément femelle (29) correspond à la section extérieure de l'élément mâle (28). Avantageusement, la section est polygonale (carrée ou hexagonale), sans possibilité de rotation. La barre d'entraînement (27) comporte en sus un manchon (30) disposé entre l'outil de travail central (2A) et l'outil de travail intermédiaire (2B). Ce manchon (30) permet d'assurer la continuité de l'entraînement entre l'élément femelle (29) et l'élément mâle (28) lorsque l'écartement choisi est sensiblement maximum (80 cm). La section intérieure du manchon (30) correspond à la section extérieure de l'élément femelle (29), elle est avantageusement polygonale.

Pour un meilleur guidage du coulissement latéral des fourreaux intermédiaires (20B) sur la poutre centrale (4), les extensions coulissantes (5, 6) comportent chacune deux tirants (21C). Un tirant (21C) étant placé à l'avant et l'autre à l'arrière de l'extension coulissante (5, 6) correspondante, compte tenu de la direction d'avance (A). Avec deux tirants (21C), l'effort de traction de l'extension coulissante (5, 6) sur le fourreau intermédiaire (20B) est mieux répartit.

La poutre centrale (4) et les deux extensions coulissantes (5, 6) sont disposées dans le même plan perpendiculaire à la direction d'avance (A). L'encombrement en longueur, dans la direction d'avance (A), du châssis télescopique (1) est réduit. Le châssis télescopique (1) est compact, son porte-à-faux est réduit.

Le châssis télescopique (1) qui vient d'être décrit, n'est qu'un exemple de réalisation et d'utilisation qui ne saurait en aucun cas limiter le domaine de protection défini par les revendications suivantes. Différentes modifications restent possibles, notamment en ce qui concerne la constitution des divers éléments ou par substitution d'équivalents techniques.

Il est tout à fait possible de prévoir un nombre différent de six outils de travail répartis sur le châssis télescopique. Un châssis télescopique comportant sept, huit ou davantage d'outils de travail fait aussi partie du domaine de protection de l'invention. L'encombrement minimum et maximum sont alors modifiés.

## Revendications

1. Châssis télescopique (1) de largeur variable pour un appareil agricole (3) comportant une poutre centrale (4) et de part et d'autre au moins une extension coulissante (5, 6), ledit châssis télescopique (1) supportant des outils de travail (2) répartis suivant un écartement défini et réglable, ledit châssis télescopique (1) présentant en outre un encombrement réduit lorsque l'écartement entre lesdits outils de travail (2) est minimum, ladite poutre centrale (4), quant à elle, présentant une longueur sensiblement voisine à celle dudit châssis télescopique (1) dans sa position d'encombrement réduit, ***caractérisé en ce que*** la longueur de chaque extension coulissante (5, 6) est sensiblement égale à la longueur de ladite poutre centrale (4).

2. Châssis télescopique selon la revendication 1, ***caractérisé en ce* qu'**il comporte un plan vertical médian (12) et que chaque extension coulissante (5, 6) présente une extrémité extérieure (13) et une extrémité intérieure (14), ladite extrémité extérieure (13) et ladite extrémité intérieure (14) s'étendent toujours d'un côté différent dudit plan vertical médian (12).

3. Châssis télescopique selon la revendication 1 ou 2, ***caractérisé en ce que*** lesdites extensions coulissantes (5, 6) restent emboîtées l'une dans l'autre quel que soit l'écartement défini entre lesdits outils de travail (2).

4. Châssis télescopique selon l'une quelconque des revendications 1 à 3, ***caractérisé en ce* qu'**il comporte une première extension coulissante (5) et une deuxième extension coulissante (6) et que lesdites extensions coulissantes (5, 6) présentent des sections de forme correspondante, mais de dimension différente.

5. Châssis télescopique selon l'une quelconque des revendications 1 à 4, ***caractérisé en ce que*** lesdites extensions coulissantes (5, 6) sont déplacées par rapport à ladite poutre centrale (4) au moyen d'un unique vérin (15).

6. Châssis télescopique selon la revendication 5, ***caractérisé en ce que*** ledit vérin (15) est intégré dans ledit châssis télescopique (1) entre une première articulation (18) et une deuxième articulation (19) et comporte une seule tige (17).

7. Châssis télescopique selon l'une quelconque des revendications 1 à 6, ***caractérisé en ce* qu'**il présente une barre d'entraînement (27) composée d'éléments mâles (28) coulissant dans des éléments femelles (29), ladite barre d'entraînement (27) comportant, en sus, un manchon (30).

8. Châssis télescopique selon la revendication 7, ***caractérisé en ce que*** ledit manchon (30) permet l'entraînement des outils de travail (2) lorsque l'écartement est sensiblement maximum.

9. Châssis télescopique selon l'une quelconque des revendications 1 à 8, ***caractérisé en ce* qu'**il comporte un cadre d'attelage (7) lié au niveau dudit plan vertical médian (12) à ladite poutre centrale (4).

10. Appareil agricole (3), ***caractérisé en ce* qu'**il comporte un châssis télescopique (1) selon l'une quelconque des revendications 1 à 9.

11. Appareil agricole selon la revendication 10, ***caractérisé en ce* qu'**il s'agit d'un semoir.

12. Appareil agricole selon la revendication 11, ***caractérisé en ce* qu'**il s'agit d'un semoir monograines.

## Claims

1. Variable-width telescopic chassis (1) for an agricultural implement (3), comprising a central beam (4) and, on either side, at least one sliding extension (5, 6), the said telescopic chassis (1) supporting work tools (2) distributed with a defined and adjustable spacing, the said telescopic chassis (1) also having a reduced size when the spacing between the said work tools (2) is at a minimum, the said central beam (4) for its part having a length substantially similar to that of the said telescopic chassis (1) in its reduced-size position, ***characterized in* that** the length of each sliding extension (5, 6) is substantially equal to the length of the said central beam (4).

2. Telescopic chassis according to Claim 1, ***characterized in* that** it has a vertical mid-plane (12), and **in that** each sliding extension (5, 6) has an outer end (13) and an inner end (14), the said outer end (13) and the said inner end (14) always lying on a different side of the said vertical mid-plane (12).

3. Telescopic chassis according to Claim 1 or 2, ***characterized in* that** the said sliding extensions (5, 6) remain nested one inside the other irrespective of the spacing defined between the said work tools (2).

4. Telescopic chassis according to any one of Claims 1 to 3, ***characterized in* that** it comprises a first sliding extension (5) and a second sliding extension (6), and **in that** the said sliding extensions (5, 6) have cross sections of corresponding shapes but different sizes.

5. Telescopic chassis according to any one of Claims 1 to 4, ***characterized in* that** the said sliding extensions (5, 6) are moved relative to the central beam (4) using a single cylinder (15).

6. Telescopic chassis according to Claim 5, ***characterized in* that** the said cylinder (15) is built into the said telescopic chassis (1) between a first articulation (18) and a second articulation (19) and has just one rod (17).

7. Telescopic chassis according to any one of Claims 1 to 6, ***characterized in* that** it has a drive bar (27) made up of male elements (28) sliding in female elements (29), the said drive bar (27) additionally comprising a sleeve (30).

8. Telescopic chassis according to Claim 7, ***characterized in* that** the said sleeve (30) allows the work tools (2) to be driven when the spacing is substantially at its maximum.

9. Telescopic chassis according to any one of Claims 1 to 8, ***characterized in* that** it comprises a coupling frame (7) attached to the said central beam (4) in the region of the said vertical mid-plane (12).

10. Agricultural implement (3), ***characterized in* that** it comprises a telescopic chassis (1) according to any one of claims 1 to 9,

11. Agricultural implement according to Claim 10, ***characterized in* that** it is a seed drill.

12. Agricultural implement according to Claim 11, ***characterized in* that** it is a planter.

## Patentansprüche

1. Teleskopischer Rahmen (1) von verstellbarer Breite für ein landwirtschaftliches Gerät (3), mit einem Mittelbalken (4) und beiderseits mindestens einer gleitenden Verlängerung (5, 6), wobei der teleskopische Rahmen (1) Arbeitswerkzeuge (2) trägt, die in einem definierten und einstellbaren Abstand verteilt sind, wobei der teleskopische Rahmen (1) ferner einen verringerten Platzbedarf aufweist, wenn der Abstand zwischen den Arbeitswerkzeugen (2) minimal ist, wobei der Mittelbalken (4) seinerseits eine Länge im Wesentlichen ähnlich jener des teleskopischen Rahmens (1) in seiner Position mit verringertem Platzbedarf aufweist, ***dadurch gekennzeichnet,* dass** die Länge jeder gleitenden Verlängerung (5, 6) im Wesentlichen gleich der Länge des Mittelbalkens (4) ist.

2. Teleskopischer Rahmen nach Anspruch 1, ***dadurch gekennzeichnet,* dass** er eine vertikale Mittelebene (12) umfasst, und dass jede gleitende Verlängerung (5, 6) ein äußeres Ende (13) und ein inneres Ende (14) aufweist, wobei sich das äußere Ende (13) und das innere Ende (14) immer auf einer anderen Seite der vertikalen Mittelebene (12) erstrecken.

3. Teleskopischer Rahmen nach Anspruch 1 oder 2, ***dadurch gekennzeichnet,* dass** die gleitenden Verlängerungen (5, 6) ineinander gesteckt bleiben, unabhängig von dem zwischen den Arbeitswerkzeugen (2) definierten Abstand.

4. Teleskopischer Rahmen nach irgend einem der Ansprüche 1 bis 3, ***dadurch gekennzeichnet,* dass** er eine erste gleitende Verlängerung (5) und eine zweite gleitende Verlängerung (6) umfasst, und dass die gleitenden Verlängerungen (5, 6) Querschnitte von entsprechender Form aber mit unterschiedlicher Abmessung aufweisen.

5. Teleskopischer Rahmen nach irgend einem der Ansprüche 1 bis 4, ***dadurch gekennzeichnet,* dass** die gleitenden Verlängerungen (5, 6) in Bezug zum Mittelbalken (4) mittels eines einzigen Zylinders (15) verschoben werden.

6. Teleskopischer Rahmen nach Anspruch 5, ***dadurch gekennzeichnet,* dass** der Zylinder (15) in den teleskopischen Rahmen (1) zwischen einem ersten Gelenk (18) und einem zweiten Gelenk (19) integriert ist und nur eine einzige Stange (17) umfasst.

7. Teleskopischer Rahmen nach irgend einem der Ansprüche 1 bis 6, ***dadurch gekennzeichnet,* dass** er eine Antriebsstange (27) umfasst, die aus Einsteckelementen (28), die in Aufnahmeelementen (29) gleiten, besteht, wobei die Antriebsstange (27) zusätzlich eine Muffe (30) umfasst.

8. Teleskopischer Rahmen nach Anspruch 7, ***dadurch gekennzeichnet,* dass** die Muffe (30) den Antrieb der Arbeitswerkzeuge (2) ermöglicht, wenn der Abstand im Wesentlichen maximal ist.

9. Teleskopischer Rahmen nach irgend einem der Ansprüche 1 bis 8, ***dadurch gekennzeichnet,* dass** er einen Kupplungsrahmen (7) umfasst, der im Bereich der vertikalen Mittelebene (12) mit dem Mittelbalken (4) verbunden ist.

10. Landwirtschaftliches Gerät (3), ***dadurch gekennzeichnet,* dass** es einen teleskopischen Rahmen (1) nach irgend einem der Ansprüche 1 bis 9 umfasst.

11. Landwirtschaftliches Gerät nach Anspruch 10, ***dadurch gekennzeichnet,* dass** es sich um eine Sämaschine handelt.

12. Landwirtschaftliches Gerät nach Anspruch 11, ***dadurch gekennzeichnet,* dass** es sich um eine Einzelkornsämaschine handelt.
